# EUROPÄISCHE PATENTSCHRIFT

(11) **EP 3 351 843 B1**
(45) Veröffentlichungstag und Bekanntmachung des Hinweises auf die Patenterteilung: **10.03.2021**
(21) Anmeldenummer: 18152301.0
(22) Anmeldetag: 18.01.2018
(51) Int. Cl.: F16L 55/18, F16L 55/163

(54) **VORRICHTUNG UND VERFAHREN ZUM SANIEREN VON ROHREN**
METHOD AND DEVICE FOR RENOVATING PIPES
DISPOSITIF ET PROCÉDÉ PERMETTANT D'ASSAINIR DES TUYAUX

(30) Priorität: 18.01.2017 DE 102017100917
(43) Veröffentlichungstag der Anmeldung: 25.07.2018
(73) Patentinhaber: Krausser, Antje, 49777 Klein Berssen (DE)
(72) Erfinder: Krausser, Antje, 49777 Klein Berssen (DE)
(74) Vertreter: Bittner, Bernhard

(56) Entgegenhaltungen:
- WO-A1-88/01707
- WO-A2-2012/016244
- DE-A1- 4 421 290
- US-A1- 2015 013 815

## Beschreibung

Die vorliegende Erfindung bezieht sich auf eine Vorrichtung und ein Verfahren zum Sanieren von Rohren. Derartige Vorrichtungen sind aus dem Stand der Technik bekannt und werden unter anderem auch als sogenannte Sanierungspacker bezeichnet. Üblicherweise weisen derartige Sanierungspacker einen zylindrischen und auch dehnbaren Schlauchkörper auf, welcher insbesondere beidseitig verschlossen oder verschließbar ist und über einen Pressluftanschluss verfügt. Diese Sanierungspacker werden in ein schadhaftes Rohr eingeführt und innerhalb dieses Rohres expandiert. Zu diesem Zweck wird an der Außenoberfläche des Sanierungspackers ein Sanierungsmaterial angebracht und dies üblicherweise in Verbindung mit einem geeigneten Harz oder Härtegemisch bestückt. Der Sanierungspacker wird an die beschädigte Stelle des Rohres transportiert und dort expandiert, um so das Sanierungsmaterial an der Innenoberfläche des Rohres abzulagern. Auf diese Weise kann die schadhafte Stelle behoben werden.

Das auf diese Weise an der Innenwandung des Rohres angepresste Sanierungsmaterial benötigt dann üblicherweise eine gewisse Abbinde- und Aushärtungszeit, um eine stabile und funktionstüchtige Reparatur des Rohres bzw. Kanals zu gewährleisten. Üblicherweise härtet dieses Sanierungsmaterial dann unter Baustellentemperaturen aus.

Es ist bekannt, dass zahlreiche der genannten Sanierungsmaterialien unter höheren Temperaturen erheblich schneller aushärten würden.

Der vorliegenden Erfindung liegt daher die Aufgabe zugrunde, einen Sanierungspacker zu schaffen, mittels dessen Einsatz die Aushärtungszeit eines Sanierungsmaterials erheblich verkürzt werden kann. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Ein erfindungsgemäßer Sanierungspacker zum wenigstens teilweisen Sanieren von Elementen und insbesondere von Rohren weist einen elastischen Grundkörper auf, der wenigstens abschnittsweise durch die Beaufschlagung mit einem fließfähigen Medium expandierbar ist. Weiterhin ist eine Erwärmungseinrichtung vorgesehen, um wenigstens einen Abschnitt des Sanierungspackers zu erwärmen, wobei die Erwärmungseinrichtung einen Zuführanschluss aufweist, um dem Sanierungspacker zu dessen Erwärmung ein fließfähiges Medium zuzuführen. Unter einem Sanieren wird insbesondere ein Ausbessern von Schadstellen wie Löchern, Rissen und dergleichen des Rohres verstanden.

Bei den Rohren kann es sich sowohl um geradlinig verlaufende Rohre handeln als auch um Rohre, welche wenigstens abschnittsweise gekrümmt sind. Der hier beschriebene Sanierungspacker kann darüber hinaus auch zum Sanieren von anderen Elementen dienen, beispielsweise von Kanälen, Schächten, Sinkkästen, Leitungen oder Leitungsbestandteilen. Bevorzugt handelt es sich bei den zu sanierenden Elementen jedoch um solche Elemente, in welche der Sanierungspacker einführbar ist und insbesondere auch um solche Elemente, welche den Sanierungspacker während der Sanierung in wenigstens einer Umfangsrichtung vollständig umgeben.

Die Druckschrift DE 44 21 290 A1 zeigt ein Verfahren und eine Fördereinrichtung für die Abdichtung insbesondere von Kanalrohren in öffentlichen Kanalnetzen, die aufgrund von Verschleiß mit der Zeit Undichtigkeiten aufweisen. Bei dem Verfahren transportiert man mittels einer spezifischen Fördereinrichtung durch das Kanalrohr hindurch eine Art Kunststoffschlauch bis zum undichten Anschlussbereich, wobei der Kunststoffschlauch plastisch verformbar ist und man eine Blase verwendet, die sich innerhalb dieses Kunststoffschlauchs befindet und durch Dampf Druckluft oder dergleichen aufgeblasen wird, so dass sich der verformbare Kunststoffschlauch im undichten Bereich an die Innenwandung des abzudichtenden Kanalrohrs anlegt und dadurch abdichtet.

Erfindungsgemäß weist der Sanierungspacker eine Auslassöffnung auf, um das fließfähige Medium aus dem Sanierungspacker auszulassen.

Es wird daher vorgeschlagen, dass dem Sanierungspacker ein fließfähiges und insbesondere ein erwärmtes fließfähiges Medium zugeführt wird, um diesen zu erwärmen.

Vorteilhaft ist zwischen dem Zuführanschluss und der Auslassöffnung wenigstens ein Raumabschnitt des Sanierungspackers bzw. des Grundkörpers angeordnet. Ausgehend von dem Zuführanschluss gelangt das fließfähige Medium in den Innenraum des Sanierungspackers, der insbesondere als Hohlraum ausgebildet ist und von dort letztlich zu der Auslassöffnung.

Bei einer bevorzugten Ausführungsform ist der elastische Grundkörper schlauchartig ausgebildet. Dies bedeutet, dass sich bevorzugt im Inneren des Grundkörpers ein Hohlraum befindet, der mit dem fließfähigen Medium beaufschlagt werden kann. Erfindungsgemäß weist dieser elastische Grundkörper wenigstens eine und bevorzugt zwei Stirnflächen auf. Dabei können diese Stirnflächen bevorzugt den elastischen Grundkörper abschließen, sodass lediglich der Zuführanschluss und die Auslassöffnung als Öffnungen vorhanden sind. Dieser besagte Hohlraum kann sich dabei bevorzugt von dem Zuführanschluss bis zu der Auslassöffnung erstrecken. Dabei ist es möglich, dass dieser Hohlraum nur durch umlaufende Wandung des Grundkörpers begrenzt wird. Insbesondere verlaufen innerhalb des Hohlraums bevorzugt keine Leitungen zum Fördern des fließfähigen Mediums.

Bei einer weiteren bevorzugten Ausführungsform ist der Sanierungspacker und insbesondere dessen Grundkörper derart ausgebildet, dass er auch durch gekrümmte Rohre geführt werden kann. Insbesondere auch durch die hier beschriebene Ausgestaltung des Grundkörpers als schlauchförmiger Körper kann dieser auch sehr flexibel ausgeführt sein und auch durch Rohre mit starker Krümmung geführt werden. Die jeweiligen Rohre können dabei, wie erwähnt sowohl geradlinig verlaufen als auch gekrümmt. Dabei können die Rohre Krümmungswinkel aufweisen, die zwischen 1° und 180°, bevorzugt zwischen 1° und 120° und besonders bevorzugt zwischen 1° und 90° liegen. Auch können die Rohre unterschiedliche Querschnitte aufweisen oder auch sich ändernde Querschnitte. Damit kann es sich bei den zu sanierenden Rohren auch um Rohrbögen handeln.

Damit ist bevorzugt dieser elastische Grundkörper im Wesentlichen (bis auf die besagten Öffnungen) abgeschlossen. Vorteilhaft ist die Auslassöffnung in einem anderen Bereich des Grundkörpers angeordnet als der Zuführanschluss. Vorteilhaft ist die Auslassöffnung in einem anderen Oberflächenbereich angeordnet als der Zuführanschluss. Durch diese getrennte Anordnung kann das fließfähige Medium einen bestimmten Fließweg zurücklegen, um von dem Zuführanschluss zu der Auslassöffnung zu gelangen. Insbesondere kann dabei das fließfähige Medium wie oben erwähnt, ungehindert von dem Zuführanschluss zu der Auslassöffnung gelangen und wird dabei insbesondere nur durch die Wandung des Grundkörpers geführt.

Unter einem Zuführanschluss wird ein Element verstanden, an dem eine Zuführeinrichtung, wie etwa eine Zuführleitung oder ein Zuführschlauch angeschlossen werden kann. Zu diesem Zweck kann der Zuführanschluss Kupplungseinrichtungen aufweisen, um einen entsprechenden Schlauch anzuschließen.

Bei einer weiteren vorteilhaften Ausführungsform ist eine Strömungsrichtung des fließfähigen Mediums in einem Bereich des Zuführanschlusses und eine Strömungsrichtung aus der Auslassöffnung heraus gleich bzw. diese Strömungsrichtungen unterscheiden sich nicht.

Bei einer weiteren vorteilhaften Ausführungsform ist eine Außenoberfläche des Sanierungspackers und insbesondere eine Außenoberfläche des Grundkörpers gegen eine Innenoberfläche eines zu sanierenden Rohres pressbar. Bei einer weiteren vorteilhaften Ausführungsform kann eine Außenoberfläche des Sanierungspackers und insbesondere des Grundkörpers mit einem Material beschichtet sein, welches zum Sanieren des jeweiligen Rohres dient.

Vorteilhaft ist an der Außenoberfläche des Sanierungspackers ein Material anordenbar, welches auf der Innenoberfläche des zu sanierenden Rohres aufgetragen wird. Dieses Material ist bevorzugt aus einer Gruppe von Materialien ausgewählt, welche GFK - Gewebe, Nadelfilz, Aramid, Kevlar, Karbon, gestrickte Gewebe, gestricktes Polyamid, gestrickte Textilien oder Kombinationen aus diesen Materialien enthält. Diese Materialien werden auf der Schadstelle verpresst und auf diese Weise wird deren Funktionstüchtigkeit (bzw. diejenige des Rohres) wieder hergestellt. Bevorzugt wird dabei die Oberfläche des Grundkörpers bzw. des Sanierungspackers auch mit einem Härtungsmaterial, insbesondere einem Harzgemisch, bestückt und dieses dann ebenfalls an die entsprechende Schadstelle innerhalb des Rohres verbracht, und an diese Innenwandung angepresst.

Bei einer weiteren vorteilhaften Ausführungsform handelt es sich damit bei dem Grundkörper um einen harzgetränkten Auskleidungsschlauch. Durch die Erwärmung wird, wie oben erwähnt, ein schnelleres Aushärten ermöglicht.

Bei einer weiteren vorteilhaften Ausführungsform ist die Auslassöffnung derart beschaffen, dass das fließfähige Medium im Wesentlichen frei aus dieser Auslassöffnung austreten kann. Hiermit wird also vorgeschlagen, dass insbesondere an dieser Stelle kein Anschluss vorgesehen ist, an den eine Leitung angebunden wird, sondern das fließfähige Material direkt wieder aus dem Grundkörper bzw. dem Sanierungspacker austritt. Insbesondere tritt das fließfähige Medium durch die Auslassöffnung direkt in die Umgebung und besonders bevorzugt direkt in das zu sanierende Rohr aus.

Bei einer weiteren vorteilhaften Ausführungsform sind der Zuführanschluss und/oder die Auslassöffnung an einer Stirnseite des Grundkörpers angeordnet. Auf diese Weise ist die Zugänglichkeit dieser Öffnungen erleichtert.

Bei einer weiteren vorteilhaften Ausführungsform ist der Zuführanschluss dazu geeignet und bestimmt, dem Grundkörper ein gasförmiges Medium zuzuführen. Vorteilhaft handelt es sich bei diesem gasförmigen Medium um heiße Luft, um Wasserdampf oder dergleichen. Es wäre jedoch auch möglich, dass über den Zuführanschluss ein flüssiges Medium zugeführt wird.

Bei einer weiteren vorteilhaften Ausführungsform sind der Zuführanschluss und die Auslassöffnung an unterschiedlichen Stirnseiten des Grundkörpers angeordnet. Dies bedeutet, dass das fließfähige Medium dem Grundkörper von einer Seite her zugeführt wird und von der anderen Seite wieder abgenommen wird bzw. aus dieser austritt.

Bei einer weiteren vorteilhaften Ausführungsform dient das gasförmige Medium sowohl zum Expandieren als auch zum Erwärmen des Grundkörpers. Dabei ist bevorzugt vorgesehen, dass dieses fließfähige Medium innerhalb des Grundkörpers wenigstens abschnittsweise frei strömen kann und insbesondere frei bis zu dem Auslass d.h. zu der Auslassöffnung strömen kann.

Erfindungsgemäß weist der Sanierungspacker wenigstens eine Ventileinrichtung auf. Diese Ventileinrichtung ist bei oder an der Auslassöffnung angeordnet. Auf diese Weise kann erreicht werden, dass der Sanierungspacker mit einem bestimmten Druck beaufschlagt wird und erst ab einem bestimmten Grenzdruck die Ventileinrichtung öffnet, um das fließfähige Medium wieder aus dem Sanierungspacker zu entlassen. Insbesondere ist damit die Ventileinrichtung im Bereich der Auslassöffnung angeordnet. Vorteilhaft handelt es sich bei der Ventileinrichtung um ein einstellbares Ventil, um so den Druck, mit dem expandiert wird, einstellen zu können.

Daneben kann der Zuführanschluss auch eine weitere Ventileinrichtung, insbesondere an dem Zuführanschluss des Sanierungspackers aufweisen. Bei dieser weiteren Ventileinrichtung kann es sich beispielsweise um ein Rückschlagventil handeln, welche einen Eintritt des fließfähigen Mediums in den Sanierungspacker erlaubt, jedoch nicht einen Austritt desselben aus dem Sanierungspacker.

Bei einer weiteren vorteilhaften Ausführungsform wäre es auch möglich, dass der Grundkörper des Sanierungspackers aus einem Material besteht, welches eine bestimmte Durchlässigkeit für Gase aufweist. Auf diese Weise kann eine effizientere Erwärmung des Grundkörpers erreicht werden. Vorteilhaft ist der Grundkörper aus einem elastischen Material hergestellt, welches eine bestimmte Temperaturleitfähigkeit aufweist, sodass dieser Grundkörper durch das fließfähige Medium schnell erwärmt wird.

Bei einer bevorzugten Ausführungsform ist das Material des Grundkörpers aus einer Gruppe von Materialien ausgewählt, welche Kautschukarten, Silikone, Silikongemische, sowie Plastikmaterialien enthält. So kann der Grundkörper auch als Plastikschlauch ausgebildet sein, der genäht, geschweißt, verklebt oder gegossen ist. Auch können Kombinationen aus diesen Verbindungsarten verwendet sein.

Vorteilhaft weist der Grundkörper eine Umfangswandung auf. Diese Umfangswandung weist bevorzugt eine Dicke bzw. Stärke auf, welche größer ist als 2 mm, bevorzugt größer als 3 mm, bevorzugt größer als 4 mm, bevorzugt größer als 5 mm und besonders bevorzugt größer als 6 mm. Weiterhin weist die Umfangswandung bevorzugt eine Dicke bzw. Stärke auf, welche geringer ist als 60 mm, bevorzugt geringer als 50 mm, bevorzugt geringer als 40 mm. Diese Dimensionen der Wandungsstärke haben sich als gut geeignet herausgestellt, um einerseits noch eine ausreichende Flexibilität auch für gekrümmte Rohre zu erreichen und um andererseits auch eine gezielte Erwärmung zu ermöglichen.

Bevorzugt weist der Hohlraum im Inneren des Grundkörpers einen Querschnitt auf, der größer ist als 4 mm, bevorzugt größer als 6 mm, bevorzugt größer als 8 mm. Bei einer weiteren vorteilhaften Ausführungsform weist der Hohlraum im Inneren des Grundkörpers einen Querschnitt auf, der kleiner ist als 40 mm, bevorzugt kleiner als 35 mm, bevorzugt kleiner als 30 mm. Auch die Wahl dieses Querschnitts dient dabei zu dem Zweck, eine schnelle und zufriedenstellende Erwärmung dieses Grundkörpers zu erreichen.

Die vorliegende Erfindung ist weiterhin auf eine Sanierungspackeranordnung gerichtet, welche einen Sanierungspacker der oben beschriebenen Art aufweist sowie eine Kompressionseinrichtung, welche ein unter Druck stehendes und dem Sanierungspacker zuzuführendes, fließfähiges Medium erzeugt. Insbesondere handelt es sich dabei um einen Kompressor, der Druckluft erzeugt. Diese Druckluft wird bevorzugt dem Sanierungspacker zugeführt, um diesen zu expandieren.

Bei einer weiteren vorteilhaften Ausführungsform weist die Sanierungspackeranordnung eine Erwärmungseinrichtung auf, welche dazu geeignet und bestimmt ist, das von der Kompressionseinrichtung erzeugte gasförmige Medium zu erwärmen. Bei dieser Erwärmungseinrichtung kann es sich beispielsweise um eine elektrische Erwärmungseinrichtung handeln, es wären jedoch auch aus dem Stand der Technik an sich bekannte Wärmetauscher möglich, um die von der Kompressoreinrichtung stammende Druckluft zu erwärmen.

Bei einer weiteren vorteilhaften Ausführungsform ist diese Erwärmungseinrichtung mit dem Sanierungspacker über einen schlauchförmigen Körper verbunden. Mittels dieses schlauchförmigen Körpers wird das erwärmte gasförmige Medium von der Erwärmungseinrichtung zu dem Sanierungspacker geleitet. Bevorzugt handelt es sich bei dieser schlauchförmigen Einrichtung um einen isolierten Schlauch und/oder einen erwärmbaren Heizschlauch und insbesondere einen elektrisch erwärmbaren Heizschlauch. Zu diesem Zweck kann diese Leitungsverbindung beispielsweise ein Material, wie etwa EPDM, aufweisen. Daneben kann diese Verbindungsleitung auch Metallgeflechte oder dergleichen aufweisen, insbesondere um eine elektrische Erwärmung desselben zu erreichen.

Bei einer weiteren vorteilhaften Ausführungsform ist die Schlauchverbindung zwischen der Erwärmungseinrichtung und dem Sanierungspacker elastisch ausgeführt.

Die vorliegende Erfindung ist weiterhin auf ein Verfahren zum Sanieren von Elementen und insbesondere von Rohren gerichtet, wobei ein Sanierungspacker in ein zu sanierendes Element eingebracht wird und innerhalb dieses zu sanierenden Elements durch Beaufschlagung mit einem gasförmigen Medium expandiert wird. Weiterhin wird wenigstens ein Abschnitt des Sanierungspackers erwärmt.

Erfindungsgemäß erfolgt die Erwärmung mittels eines fließfähigen Mediums, welches in wenigstens einen Abschnitt des Sanierungspackers eingeleitet wird, wobei das fließfähige Medium wenigstens teilweise wieder aus dem Sanierungspacker ausgeleitet wird. Bevorzugt wird das fließfähige Medium aus dem Sanierungspacker unmittelbar in die Umgebung ausgelassen und/oder in das zu sanierende Rohr, insbesondere falls sich eine Stirnfläche des Sanierungspackers noch in diesem Rohr befindet.

Es wird daher auch verfahrensseitig vorgeschlagen, dass durch ein fließfähiges und insbesondere gasförmiges oder flüssiges Medium der Sanierungspacker beheizt wird. Vorteilhaft wird das fließfähige Medium zwischen Zuführanschluss und einer Auslassöffnung leitungsfrei transportiert, d.h. insbesondere ohne zusätzliche Leitungen im Inneren des Sanierungspackers. Auf diese Weise kann eine sehr einfache Ausgestaltung der Vorrichtung erreicht werden.

Bei einer weiteren vorteilhaften Ausführungsform wird das gleiche gasförmige Medium verwendet, um den Abschnitt des Sanierungspackers zu expandieren und zu erwärmen. Dies bedeutet, dass beispielsweise dem Sanierungspacker ein unter Druck stehendes fließfähiges Medium zugeführt wird, um diesen zu expandieren. Ab einem bestimmten Überdruck tritt dieses Medium wieder durch einen Auslass aus dem Sanierungspacker aus. Auf diese Weise kann einerseits eine bestimmte Strömung des fließfähigen Mediums innerhalb des Sanierungspackers erreicht werden und andererseits auch eine gewünschte Expansion. Auf diese Weise wird das fließfähige Medium zunächst einem Hohlraum innerhalb des Sanierungspackers zugeführt und bewirkt dort die Expandierung des Sanierungspackers. Über die Auslassöffnung wird das fließfähige Medium wieder aus dem Sanierungspacker ausgeführt.

Bei einem weiteren vorteilhaften Verfahren weist das fließfähige Medium, wenn es in den Sanierungspacker gelangt, eine Temperatur auf, welche größer ist als 40 Grad, bevorzugt größer als 50 Grad und besonders bevorzugt größer als 60 Grad. Weitere Vorteile und Ausführungsformen ergeben sich aus der beigefügten Figur. Dabei zeigt:
Bei einer weiteren bevorzugten Ausführungsform ist der Sanierungspacker derart ausgestaltet, dass wenigstens ein Element des Sanierungspackers gegenüber dem zu sanierenden Element beweglich ist und insbesondere nach erfolgter Sanierung des Elements wieder von diesem Element abführbar und/oder entnehmbar ist. Insbesondere ist der Grundkörper des Sanierungspackers dafür vorgesehen, nach erfolgter Sanierung wieder aus dem zu sanierenden Element wie etwa einem Rohr entnommen zu werden.

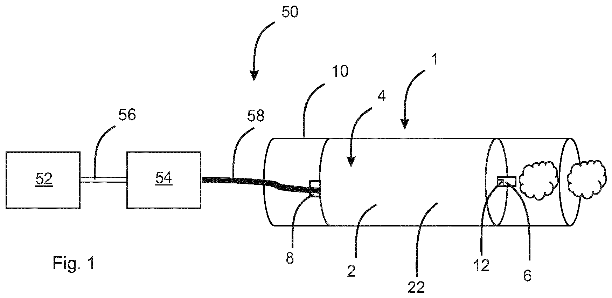

- Fig. 1: eine schematische Darstellung einer erfindungsgemäßen Anordnung zum Sanieren von Rohren.

Figur 1 zeigt eine grob schematische Darstellung einer erfindungsgemäßen Anordnung zum Sanieren von Rohren 10. Bei dieser Anordnung wird ein Sanierungspacker 1 in das zu sanierende Rohr 10 eingeführt. Anschließend wird der Sanierungspacker durch Beaufschlagung mit Druckluft expandiert. Dabei legt sich eine Außenwandung des Sanierungspackers, die mit einem Sanierungsmaterial versehen ist, an die Innenwandung und insbesondere an die Schadstelle des Rohres 10 an.

Das Bezugszeichen 8 kennzeichnet einen Anschluss, mittels dessen dem Sanierungspacker 1 das fließfähige Medium zugeführt werden kann. Das Bezugszeichen 4 kennzeichnet insgesamt die Erwärmungseinrichtung, welche zum Erwärmen des Sanierungspackers besteht. Diese weist mehrere Komponenten auf, wie insbesondere den Anschluss 8 zum Zuführen des fließfähigen Mediums als auch eine Auslassöffnung 6, über welche das fließfähige Medium wieder aus dem Sanierungspacker austreten kann.

Das Bezugszeichen 12 kennzeichnet eine Ventileinrichtung, welche einstellbar ist, sodass insgesamt ein Druck innerhalb des Sanierungspackers einstellbar ist. Das Bezugszeichen 2 kennzeichnet einen elastischen Grundkörper des Sanierungspackers.

Das Bezugszeichen 50 bezieht sich in seiner Gesamtheit auf eine Sanierungspackeranordnung, welche die oben erwähnten Bestandteile aufweist. Diese Sanierungspackeranordnung weist eine Kompressoreinrichtung 52 auf, mittels derer ein unter Druck stehendes fließfähiges Medium und insbesondere gasförmiges Medium erzeugt wird. Ausgehend von dieser Kompressoreinrichtung wird das komprimierte gasförmige Medium über eine Verbindungsleitung 56 einer Erwärmungseinrichtung 54 zugeführt.

Mittels dieser Erwärmungseinrichtung wird das fließfähige Medium erwärmt. Anschließend gelangt das fließfähige Medium über eine Verbindungsleitung wie insbesondere einen Verbindungsschlauch 58 zu dem Anschluss 8 und damit zu dem Sanierungspacker. Der Grundkörper des Sanierungspackers ist bevorzugt als innen hohler Schlauch ausgebildet, sodass das fließfähige Medium sich gleichmäßig innerhalb des von dem Schlauch gebildeten Hohlraums verteilen kann. Schließlich tritt das fließfähige Medium wieder über die Auslassöffnung 6 aus. Das Bezugszeichen 22 kennzeichnet einen Hohlraum im Inneren des Grundkörpers. Dieser erstreckt sich von dem Anschluss 8 zu der Auslassöffnung 6. Dieser Hohlraum wird dabei nur durch die Umfangswandung des Grundkörpers 2.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Sanierungspacker
- 2: elastischer Grundkörper
- 4: Erwärmungseinrichtung
- 6: Auslassöffnung
- 8: Anschluss
- 10: Rohr
- 12: Ventileinrichtung
- 22: Hohlraum
- 50: Sanierungspackeranordnung
- 52: Kompressoreinrichtung
- 54: Erwärmungseinrichtung
- 56: Verbindungsleitung
- 58: Verbindungsschlauch

## Patentansprüche

1. Sanierungspacker (1) zum wenigstens teilweisen Sanieren von Elementen und insbesondere von Rohren mit einem elastischen Grundkörper (2), der wenigstens abschnittsweise durch die Beaufschlagung mit einem fließförmigen Medium expandierbar ist, und mit einer Erwärmungseinrichtung (4), um wenigstens einen Abschnitt des Sanierungspackers (1) zu erwärmen, wobei die Erwärmungseinrichtung (4) einen Zuführanschluss (8) aufweist, um dem Sanierungspacker (1) zu dessen Erwärmung ein fließfähiges Medium zuzuführen,
wobei der Sanierungspacker (1) eine Auslassöffnung (6) aufweist, um das fließfähige Medium aus dem Sanierungspacker (1) auszulassen, wobei Stirnflächen den elastischen Grundkörper abschließen, so dass lediglich der Zuführanschluss (8) und die Auslassöffnung (6) als Öffnungen vorhanden sind, und wobei der Sanierungspacker (1) wenigstens eine Ventileinrichtung (12) aufweist, die bei oder an der Auslassöffnung (6) angeordnet ist, so dass der Sanierungspacker (1) mit einem bestimmten Druck beaufschlagt wird und erst ab einem bestimmten Grenzdruck die Ventileinrichtung (12) öffnet, um das fließfähige Medium wieder aus dem Sanierungspacker (1) zu entlassen.

2. Sanierungspacker (1) nach Anspruch 1,
**dadurch gekennzeichnet, dass**
die Auslassöffnung (6) derart beschaffen ist, dass das fließfähige Medium im Wesentlichen frei aus dieser Auslassöffnung (6) austreten kann.

3. Sanierungspacker (1) nach wenigstens einem der vorangegangenen Ansprüche,
**dadurch gekennzeichnet, dass**
der Zuführanschluss (8) und/oder die Auslassöffnung (6) an einer Stirnseite des Grundkörpers (2) angeordnet ist.

4. Sanierungspacker (1) nach wenigstens einem der vorangegangenen Ansprüche,
**dadurch gekennzeichnet, dass**
der Zuführanschluss (8) dazu geeignet und bestimmt ist, dem Grundkörper (2) ein gasförmiges Medium zuzuführen.

5. Sanierungspacker (1) nach wenigstens einem der vorangegangenen Ansprüche,
**dadurch gekennzeichnet, dass**
das gasförmige Medium sowohl zum Expandieren als auch zum Erwärmen des Grundkörpers (2) dient.

6. Sanierungspackeranordnung (50) mit einem Sanierungspacker (1) nach wenigstens einem der vorangegangenen Ansprüche und einer Kompressionseinrichtung (52) welche ein unter Druck stehendes und dem Sanierungspacker (1) zuzuführendes gasförmiges Medium erzeugt, wobei Stirnflächen den elastischen Grundkörper (2) abschließen, so dass lediglich der Zuführanschluss (8) und die Auslassöffnung (6) als Öffnungen vorhanden sind, und wobei der Sanierungspacker (1) wenigstens eine Ventileinrichtung (12) aufweist, die bei oder an der Auslassöffnung (6) angeordnet ist so dass der Sanierungspacker (1) mit einem bestimmten Druck beaufschlagt wird und erst ab einem bestimmten Grenzdruck die Ventileinrichtung (12) öffnet, um das fließfähige Medium wieder aus dem Sanierungspacker (1) zu entlassen.

7. Sanierungspackeranordnung (50) nach Anspruch 6 mit einer Erwärmungseinrichtung (54) welche dazu geeignet und bestimmt ist, dass von der Kompressionseinrichtung (52) erzeugte gasförmige Medium zu erwärmen.

8. Verfahren zum Sanieren von Elementen und insbesondere von Rohren, wobei ein Sanierungspacker (1) in ein zu sanierendes Element (10) eingebracht wird und innerhalb dieses zu sanierenden Elements (10) durch Beaufschlagung mit einem gasförmigen Medium expandiert wird, und wobei wenigstens ein Abschnitt des Sanierungspackers (1) erwärmt wird,
wobei die Erwärmung mittels eines fließfähigen Mediums erfolgt, welche in wenigstens einen Abschnitt des Sanierungspackers (1) eingeleitet wird, wobei das fließfähige Medium wenigstens teilweise wieder aus dem Sanierungspacker (1) ausgeleitet wird, wobei Stirnflächen den elastischen Grundkörper (2) abschließen, so dass lediglich der Zuführanschluss (8) und die Auslassöffnung (6) als Öffnungen vorhanden sind, und wobei der Sanierungspacker (1) wenigstens eine Ventileinrichtung (12) aufweist, die bei oder an der Auslassöffnung (6) angeordnet ist, so dass der Sanierungspacker (1) mit einem bestimmten Druck beaufschlagt wird und erst ab einem bestimmten Grenzdruck die Ventileinrichtung (12) öffnet, um das fließfähige Medium wieder aus dem Sanierungspacker (1) zu entlassen.

9. Verfahren nach Anspruch 8,
**dadurch gekennzeichnet, dass**
das gleiche gasförmige Medium verwendet wird, um den Abschnitt des Sanierungspackers (1) zu expandieren und zu erwärmen.

## Claims

1. Renovation packer (1) for at least partial renovation of elements and in particular pipes with a resilient basic body (2), which is expandable at least in some sections by the application of a flowable medium, and with a heating device (4) for heating at least one section of the renovation packer (1), wherein the heating device (4) has a feed connection (8) for feeding a flowable medium to the renovation packer (1) for heating thereof,
wherein the renovation packer (1) has an outlet opening (6) for discharging the flowable medium from the renovation packer (1), wherein end faces close the resilient main body, so that the only openings are the feed connection (8) and the outlet opening (6), and wherein the renovation packer (1) has at least one valve device (12) which is arranged by or at the outlet opening (6), so that the renovation packer (1) is acted upon by a specific pressure and the valve device (12) only opens when a specific limiting pressure is exceeded, in order to discharge the flowable medium again from the renovation packer (1).

2. Renovation packer (1) according to claim 1,
**characterised in that**
the outlet opening (6) is designed in such a way that the flowable medium can exit substantially freely from this outlet opening (6).

3. Renovation packer (1) according to at least one of the preceding claims,
**characterised in that**
the feed connection (8) and/or the outlet opening (6) is/are arranged on an end face of the main body (2).

4. Renovation packer (1) according to at least one of the preceding claims,
**characterised in that**
the feed connection (8) is suitable and intended to feed a gaseous medium to the main body (2).

5. Renovation packer (1) according to at least one of the preceding claims,
**characterised in that**
the gaseous medium serves both for expanding and also for heating the main body (2).

6. Renovation packer arrangement (50) with a renovation packer (1) according to at least one of the preceding claims and a compression device (52) which produces a pressurised gaseous medium to be fed to the renovation packer (1), wherein end faces close the resilient main body (2), so that the only openings are the feed connection (8) and the outlet opening (6), and wherein the renovation packer (1) has at least one valve device (12) which is arranged by or at the outlet opening (6), so that the renovation packer (1) is acted upon by a specific pressure and the valve device (12) only opens when a specific limiting pressure is exceeded, in order to discharge the flowable medium again from the renovation packer (1).

7. Renovation packer arrangement (50) according to claim 6 with a heating device (54) which is suitable and intended to heat the gaseous medium produced by the compression device (52).

8. Method for renovating elements and in particular pipes, wherein a renovation packer (1) is introduced into an element (10) to be renovated and, inside this element (10) to be renovated, is expanded by application of a gaseous medium, and wherein at least one section of the renovation packer (1) is heated,
wherein the heating takes place by means of a flowable medium which is introduced into at least one section of the renovation packer (1), wherein the flowable medium is at least partially discharged again from the renovation packer (1), wherein end faces close the resilient main body (2), so that the only openings are the feed connection (8) and the outlet opening (6), and wherein the renovation packer (1) has at least one valve device (12) which is arranged by or at the outlet opening (6), so that the renovation packer (1) is acted upon by a specific pressure and the valve device (12) only opens when a specific limiting pressure is exceeded, in order to discharge the flowable medium again from the renovation packer (1).

9. Method according to claim 8,
**characterised in that**
the same gaseous medium is used to expand and to heat the section of the renovation packer (1).

## Revendications

1. Packer d'assainissement (1) permettant d'assainir au moins en partie des éléments et en particulier des tuyaux avec un corps de base (2) élastique, qui peut être élargi au moins sur certaines parties par la soumission à l'effet d'un milieu coulant, et avec un dispositif de chauffage (4), afin de chauffer au moins une partie du packer d'assainissement (1), dans lequel le dispositif de chauffage (4) présente un raccord d'alimentation (8), afin d'amener un milieu coulant au packer d'assainissement (1) pour le chauffage de celui-ci,
dans lequel le packer d'assainissement (1) présente une ouverture de sortie (6), afin de laisser s'écouler le milieu coulant du packer d'assainissement (1), dans lequel des surfaces frontales obturent le corps de base élastique, de sorte que seul le raccord d'alimentation (8) et l'ouverture de sortie (6) sont présents en tant qu'ouvertures, et dans lequel le packer d'assainissement (1) présente au moins un dispositif de soupape (12), qui est disposé près de ou sur l'ouverture de sortie (6), de sorte que le packer d'assainissement (1) est soumis à l'effet d'une pression définie et le dispositif de soupape (12) ne s'ouvre qu'à partir d'une pression limite définie, afin de laisser à nouveau le milieu coulant s'échapper du packer d'assainissement (1).

2. Packer d'assainissement (1) selon la revendication 1,
**caractérisé en ce que**
l'ouverture de sortie (6) est constituée de telle sorte que le milieu coulant peut sortir sensiblement librement de cette ouverture de sortie (6).

3. Packer d'assainissement (1) selon au moins l'une des revendications précédentes,
**caractérisé en ce que**
le raccord d'alimentation (8) et/ou l'ouverture de sortie (6) sont disposés sur une face frontale du corps de base (2).

4. Packer d'assainissement (1) selon au moins l'une des revendications précédentes,
**caractérisé en ce que**
le raccord d'alimentation (8) est adapté et destiné à amener un milieu gazeux au corps de base (2).

5. Packer d'assainissement (1) selon au moins l'une des revendications précédentes,
**caractérisé en ce que**
le milieu gazeux sert aussi bien à élargir qu'à chauffer le corps de base (2).

6. Ensemble packer d'assainissement (50) avec un packer d'assainissement (1) selon au moins l'une des revendications précédentes et un dispositif de compression (52), lequel génère un milieu gazeux sous pression et à amener au packer d'assainissement (1), dans lequel des faces frontales obturent le corps de base (2) élastique, de sorte que seul le raccord d'alimentation (8) et l'ouverture de sortie (6) sont présents en tant qu'ouvertures, et dans lequel le packer d'assainissement (1) présente au moins un dispositif de soupape (12), qui est disposé près de ou sur l'ouverture de sortie (6) de sorte que le packer d'assainissement (1) est soumis à l'effet d'une pression définie et ce n'est qu'à partir d'une pression limite définie que le dispositif de soupape (12) s'ouvre, afin de laisser le milieu coulant à nouveau s'échapper du packer d'assainissement (1).

7. Ensemble packer d'assainissement (50) selon la revendication 6 avec un dispositif de chauffage (54), lequel est adapté et destiné à chauffer le milieu gazeux généré par le dispositif de compression (52).

8. Procédé pour assainir des éléments et en particulier des tuyaux, dans lequel un packer d'assainissement (1) est introduit dans un élément (10) à assainir et est élargi par soumission à l'effet d'un milieu gazeux à l'intérieur de cet élément (10) à assainir, et dans lequel au moins une partie du packer d'assainissement (1) est chauffée,
dans lequel le chauffage s'effectue au moyen d'un milieu coulant, lequel est introduit dans au moins une partie du packer d'assainissement (1), dans lequel le milieu coulant est évacué au moins en partie à nouveau du packer d'assainissement (1), dans lequel des faces frontales obturent le corps de base (2) élastique, de sorte que seuls le raccord d'alimentation (8) et l'ouverture de sortie (6) sont présents en tant qu'ouvertures, et dans lequel le packer d'assainissement (1) présente au moins un dispositif de soupape (12), qui est disposé prés de ou sur l'ouverture de sortie (6), de sorte que le packer d'assainissement (1) est soumis à l'effet d'une pression définie et le dispositif de soupape (12) ne s'ouvre qu'à partir d'une pression limite définie, afin de laisser le milieu coulant à nouveau s'échapper du packer d'assainissement (1).

9. Procédé selon la revendication 8,
**caractérisé en ce que**
le même milieu gazeux est utilisé pour élargir et chauffer la partie du packer d'assainissement (1).
